# FASCICULE DE BREVET EUROPEEN

(11) **EP 1 152 997 B1**
(45) Date de publication et mention de la délivrance du brevet: **08.12.2004**
(21) Numéro de dépôt: 00902713.7
(22) Date de dépôt: 07.02.2000
(51) Int. Cl.: C04B 28/14, C04B 111/27

(54) **ELEMENT DE CONSTRUCTION PREFABRIQUE A BASE DE PLATRE, PRESENTANT UNE RESISTANCE A L'EAU**
WASSERBESTÄNDIGES VORGEFERTIGTES GIPSBAUELEMENT
WATER-RESISTANT PLASTER-BASED PREFABRICATED CONSTRUCTION ELEMENT

(30) Priorité: 12.02.1999 FR 9901885
(43) Date de publication de la demande: 14.11.2001
(73) Titulaire: LAFARGE PLATRES, 84000 Avignon (FR)
(72) Inventeur: MARTIN, Daniel, F-69007 Lyon (FR); THEUVSEN, Théo, D-79206 Breisach (DE); HUMBERT, Régis, F-84800 Isle sur la Sorgue (FR)
(74) Mandataire: Pochart, François
(86) Numéro de dépôt international: PCT/FR2000/000280
(87) Numéro de publication internationale: WO 2000/047536

(56) Documents cités:
- WO-A-93/09066
- US-A- 5 817 262
- PATENT ABSTRACTS OF JAPAN vol. 1996, no. 04, 30 avril 1996 (1996-04-30) & JP 07 330411 A (MITSUBISHI CHEM CORP;OTHERS: 02), 19 décembre 1995 (1995-12-19) cité dans la demande
- CHEMICAL ABSTRACTS, vol. 94, no. 12, 23 mars 1981 (1981-03-23) Columbus, Ohio, US; abstract no. 89165u, "Powdery waterproofing agents" XP000060510 & JP 55 109251 A (DANTO CO., LTD) 22 août 1980 (1980-08-22) cité dans la demande
- DATABASE WPI Section Ch, Week 198903 Derwent Publications Ltd., London, GB; Class C04, AN 1989-022712 XP002121155 & SU 1 409 607 A (CONTINENTAL GROUP INC), 15 juillet 1988 (1988-07-15) cité dans la demande

## Description

La présente invention concerne les éléments de construction préfabriqués, comprenant un substrat à base de plâtre durci et sec. Plus particulièrement, l'invention s'intéresse aux éléments de construction préfabriqués du type carreaux, panneaux et plaques. S'agissant des plaques, celles considérées par la présente invention ont une épaisseur moyenne relativement faible, par exemple de un à plusieurs centimètres, selon une direction ou dimension préférentielle, avec une masse surfacique limitée, par exemple une dizaine de kilogrammes par m². A titre d'exemple préférentiel, mais non limitatif, on se réfèrera aux éléments préfabriqués du type plaque, sachant qu'aujourd'hui il existe par exemple des plaques de plâtre fibreuses dans lesquelles le plâtre contient dans la masse des fibres dispersées de manière homogène, et communément désignées sous le vocable anglais "GFB", et des plaques de plâtre revêtues de carton, ou de mats ou de feuilles de fibres minérales (verre par exemple) sur leurs deux faces.

La présente demande correspond à la demande de brevet français n° 99.01885 du 12.02.1999, dont le texte est incorporé à celui de la présente demande de brevet, en tant que de besoin.

L'invention s'applique à d'autres éléments préfabriqués en plâtre, par exemple à des carreaux, ou éléments parallélépipédiques comportant sur leur tranche latérale des gorges ou rainures et des tenons.

L'invention s'intéresse aux éléments de construction préfabriqués, tels que précédemment définis, présentant une résistance à l'eau améliorée.

Les éléments de construction préfabriqués tels que précédemment définis, ayant l'aptitude de résister à l'eau, sont utilisés, soit à l'intérieur des bâtiments, par exemple dans des locaux humides du type salles de bains, pour y poser des revêtements plastiques ou carrelages, soit à l'extérieur des bâtiments, par exemple pour le revêtement de façades, à la condition néanmoins que ces éléments préfabriqués soient revêtus d'une peau protectrice et imperméable.

Par "résistant à l'eau", on entend l'aptitude qu'a un élément de construction préfabriqué, tel que précédemment défini, de limiter la reprise d'eau du substrat de plâtre, tout en préservant la stabilité dimensionnelle et la tenue mécanique de l'élément de construction considéré.

Selon les pays, cette résistance à l'eau est codifiée ou réglementée par des normes précises. Ainsi, on se réfèrera aux normes indiquées ci-après, en fonction de l'élément fabriqué :
- carreau de plâtre : NF P72-201-1 (avril 1994) ;
- plaque de plâtre : ASTM 630/630M-96a ;
- plaque avec mat de verre : ASTMC1178/1178M(96).

La norme ASTM 630/630M-96a exige en particulier que, lorsqu'un tel élément de construction est immergé dans de l'eau pendant deux heures, la reprise d'eau du substrat de plâtre soit inférieure à 5 %, et l'absorption d'eau en surface (dite équivalent Cobb) soit inférieure à 160 g/m².

Aux fins de l'hydrofugation d'un élément de construction tel que précédemment défini, conformément au document JP-A-0 730411, il est connu d'utiliser un agent d'hydrofugation comprenant au moins un composé siliconé en milieu aqueux et basique, et d'incorporer de manière homogène ce dernier au substrat de l'élément considéré.

Selon JP-A-0 733 0411, le composé siliconé est émulsionné avec de l'eau. Puis un oxyde ou hydroxyde d'un métal du groupe IIa, par exemple de calcium, est ajouté à l'émulsion. Puis l'additif ainsi obtenu incorporé à la matière sèche, pour obtenir le substrat de plâtre à l'état humide, lequel est ensuite mis en forme puis séché.

Il apparaît en pratique que la composition précitée a l'avantage de provoquer une polymérisation ou réticulation du composé siliconé, ce qui renforce le pouvoir hydrofugeant de ce dernier ; mais ceci s'accompagne de forts dégagements d'hydrogène particulièrement dangereux.

Conformément au document JP-A-80109251, on a décrit une composition d'hydrofugation pour ciment, comportant un composé siliconé dont la nature n'est pas spécifiée, et de la bentonite, en tant qu'additif minéral.

Conformément au document SU-A-1409607, on a décrit une composition d'hydrofugation pour plâtre, comportant un méthyle ou éthyle-siliconate de sodium et de la bentonite, en tant qu'additif minéral.

En pratique, une telle composition présente un pouvoir gonflant, générant des problèmes de rhéologie du substrat à l'état de pâte.

Il apparaît en pratique difficile de satisfaire aux normes ci-dessus, avec des teneurs en composé siliconé inférieures à 1 % en poids, ledit composé étant par ailleurs fort coûteux.

Pour parvenir à cette hydrofugation, on met en oeuvre tout procédé, comprenant en général au moins les étapes suivantes :
(a) mélange homogène d'une matière sèche comprenant majoritairement au moins un sulfate de calcium hydratable, l'agent d'hydrofugation précité, et l'eau, et on préforme à partir dudit mélange à l'état humide ledit substrat ;
(b) on sèche le substrat préformé, pour obtenir ce dernier formé à l'état solide et sec.

Avec un tel procédé, il est difficile de contrôler la quantité d'agent d'hydrofugation incorporé dans le substrat de plâtre, par exemple sous forme d'huile de silicone, et donc on n'exploite pas le potentiel de l'agent d'hydrofugation.

La présente invention a donc pour objet de mieux maîtriser l'hydrofugation d'un élément de construction, avec un agent d'hydrofugation comprenant au moins un composé siliconé, en particulier pour augmenter son pouvoir hydrofugeant au sein du plâtre durci.

La présente invention a également pour objet d'améliorer l'introduction et le mélange de l'agent d'hydrofugation dans le procédé précédemment défini.

Conformément à la présente invention, on a découvert que l'ajout en mélange homogène, d'un additif minéral comprenant, d'une part un matériau argileux, non gonflant en milieu aqueux, et ne comportant pas de fonction hydroxyle ionisable en milieu aqueux, et d'autre part une silice cristalline, ledit additif minéral ayant une affinité synergique d'hydrofugation avec le composé siliconé, à la matière sèche à partir de laquelle le substrat est préformé à l'état liquide, permettait d'augmenter dans des proportions importantes l'hydrofugation du plâtre durci.

Par "affinité synergique d'hydrofugation", on entend la propriété selon laquelle, grâce à l'ajout de l'additif minéral selon la présente invention, et toutes choses égales par ailleurs, l'hydrofugation du substrat de plâtre durci se trouve augmentée d'au moins 20%, en équivalent Cobb, selon la norme ASTM 630/630M-96a, et/ou pour la même résistance à l'eau, la quantité d'agent d'hydrofugation requise est diminuée d'au moins 20 %.

Préférentiellement, mais de manière non limitative, le matériau argileux ne réagit pas avec le composé siliconé, au sens où, au bout de deux heures, le mélange de 0.1g dudit composé silicone avec ledit matériau argileux, en milieux aqueux, dans les mêmes proportions pondérales que celles utilisée pour la fabrication de l'élément de construction préfabriqué, dégage éventuellement une quantité d'hydrogène inférieure ou égale à 6ml, dans des conditions normales de température et pression.

La mesure du dégagement d'hydrogène est réalisée selon le mode opératoire suivant.

On utilise un appareillage identique à celui décrit dans la norme NFT 77-150 page 6. Le principe consiste à mettre en présence, dans le réacteur, l'additif minéral et le composé siliconé, en milieu aqueux, dans les mêmes proportions pondérales que celles dans le mélange homogène défini précédemment, à l'état de pâte, c'est à dire avec l'eau de gâchage. Le dégagement d'hydrogène est suivi dans le temps, à une température contrôlée de 23°C. On note le volume d'hydrogène dégagé au bout de deux heures.

Un additif minéral ne réagissant pratiquement pas avec le composé siliconé est celui qui provoque un dégagement parasite d'hydrogène, au bout de deux heures, inférieur ou égal à 6ml, dans des conditions normales de température et pression.

Un additif minéral selon l'invention permet donc d'augmenter la résistance à l'eau d'un élément de construction conforme à l'invention, et/ou de diminuer la quantité d'agent d'hydrofugation requise pour un niveau prédéterminé de résistance à l'eau.

Selon la présente invention, s'agissant d'un matériau argileux, ne comportant pas de fonction hydroxyle ionisable en milieu aqueux, une explication possible (parmi d'autres hyothèses) pour la synergie constatée, supportée par le protocole expérimental décrit ci-après, est la formation d'au moins une liaison hydrogène, en milieu aqueux neutre ou acide, entre d'un côté l'hydrogène, d'une fonction hydroxyle non ionisable du matériau argileux, et de l'autre côté l'oxygène du composé siliconé.

En d'autres termes selon l'invention, le matériau argileux absorbe le composé siliconé. Et le mélange homogène du matériau argileux dans le substrat de plâtre, permet la distruction homogène et la fixation du composé slliconé.

Eventuellement, pendant le durcissement, les ions hydroxyle naturellement présents dans le milieu aqueux, conduisent à une réticulation selon trois dimensions du composé siliconé, ce qui se traduit, dans le temps, par une amélioration des propriétés d'hydrofugation du plâtre durci.

Par conséquent, l'adsorption du composé siliconé sur le matériaux argileux permet de contrôler sa réactivité, c'est-à-dire de retarder cette dernière jusqu'au moment du durcissement du plâtre.

Préférentiellement, selon l'invention, le composé siliconé réactif est un composé hydrofuge macromoléculaire, linéaire, cyclisé ou ramifié, comportant des motifs polysiloxaniques, dont chacun est choisi dans le groupe, constitué par les motifs (R₁R₂R₃SiO_{1/2}), (R₁R₂SiO), (R₂SiO_{3/2}), avec :
- R₁ = H,Cl, ou tout autre halogène, ou alcoxy
- R₂ = un phényle ou alkyle, ramifié ou non
- R₃ = un phényle ou alkyle, ramifié ou non.

A titre d'exemple, la silicone est un alkylhydrogénopolysiloxane, tel que le méthylhydrogenopolysiloxane, sous forme d'oligomère (quelques dizaines ou plus de motifs siloxaniques), présenté sous forme d'huile ou d'émulsion aqueuse.

Préférentiellement, selon l'invention, l'additif minéral comporte aussi un complément minéral inerte, compatible avec le matériau argileux.

A titre d'exemple, un tel matériau argileux, non gonflant en milieu aqueux (au contraire de la bentonite), comprend un alumino-silicate, par exemple une illite et/ou un kaolin.

Un additif minéral selon l'invention comprend éventuellement un complément minéral inerte, compatible avec le matériau argileux, au sens où il ne réagit pratiquement pas avec le composé siliconé, comme précédemment indiqué.

Conformément à l'invention, l'additif minéral est inerte vis-à-vis du sulfate de calcium, au départ sous forme de poudre. Il comporte par exemple un matériau argileux, comme montré ci-après.

Grâce à l'invention, et lorsqu'on utilise un procédé de type papetier, notamment par filtration d'une boue ("slurry"), pour fabriquer des plaques GFB, à base de fibres cellulosiques, on a constaté que l'incorporation d'un additif minéral comportant par exemple un matériau argileux permettait de retenir l'agent d'hydrofugation au sein du substrat de plâtre préformé à l'état humide. Ceci permet d'augmenter, à teneur égale en agent d'hydrofugation, la résistance à l'eau des plaques GFB fabriquées par un tel procédé, et en particulier de limiter la quantité de cet agent dans l'eau d'hydratation recyclée.

La présente invention présente encore les caractéristiques secondaires suivantes :
- La composition pondérale de l'additif minéral dans la matière sèche, en combinaison avec la quantité et la nature de l'agent d'hydrofugation, est adaptée pour conférer à l'élément de construction en plâtre durci, une résistance à l'eau en conformité avec les normes précitées, et en particulier ASTM 630/630M-96a, pour une plaque dite GFB.
- Le composé siliconé réactif représente une proportion pondérale de la matière sèche totale introduite, au moins égale à 0,1 %, et de préférence comprise entre 0,1 et 1 %.
- Les fibres de renfort, par exemple cellulosiques, sont distribuées dans le substrat de plâtre durci ; l'élément de construction est par exemple une plaque fibreuse dite GFB.
- L'élément a la forme d'une plaque ; et les deux faces du substrat de plâtre durci sont revêtues par deux feuilles de fibres cellulosiques, par exemple de carton ;
- L'additif minéral a une granulométrie telle que les particules ayant une taille inférieure ou égale à 63 µm représentent une proportion pondérale au moins égale à 85 % dudit additif minéral ; préférentiellement, l'additif minéral comporte une perte au feu à 900° C inférieure à 30 % ; à titre d'exemple l'additif minéral a une perte au feu inférieure à 30 % ; à titre d'exemple, l'additif minéral représente une proportion du poids total des ingrédients, hors eau d'hydratation, au moins égale à 5 %, et préférentiellement au plus égale à 15 %.
- Le sulfate de calcium hydratable est obtenu à partir d'un gypse naturel, ou d'un sulfogypse ; ce dernier provenant de la désulfuration de gaz de centrales thermiques.
- Le composé siliconé réactif peut être introduit lors de la fabrication de l'élément de construction, sous la forme d'une composition émulsionnée d'un silicone dans l'eau.
- A titre d'exemple, en combinaison, l'additif minéral comporte un matériau argileux, une silice cristalline, et éventuellement un complément minéral inerte, compatible avec le matériau argileux et dispersable dans le substrat de plâtre durci
- La composition pondérale de l'additif minéral est adaptée, en coopération avec l'agent d'hydrofugation, pour conférer à l'élément de construction, utilisé dans des cloisons de murs, également une résistance au feu conforme aux normes allemandes dites "GKF", suivant DIN 18180 et 4102 (partie IV) ;
- Le complément minéral inerte, s'il existe dans l'additif minéral, est par exemple de la dolomie, et l'additif minéral comporte alors en proportions pondérales sensiblement égales le matériau argileux (dont la silice cristalline), et le complément minéral inerte ; cet additif minéral particulier permet, avec l'agent d'hydrofugation, d'obtenir des plaques résistantes à la fois au feu et à l'eau, et respectant en particulier à la fois les normes GKF et les normes précitées de résistance à l'eau, quel que soit le procédé utilisé pour obtenir les plaques de plâtre, ou pour obtenir des plaques fibreuses dites "GFB".
- Des fibres de renfort, préférentiellement des fibres minérales compatibles avec le sulfate de calcium hydratable, par exemple des fibres de verre, sont également distribuées dans le substrat de plâtre durci, dans une proportion pondérale par rapport au total de la matière sèche introduite, inférieure à 1 %, lorsqu'on veut en particulier améliorer la résistance au feu des plaques.
- L'additif minéral comprend une silice amorphe, et/ou de la terre de diatomée, et/ou de la ferrite, et/ou une zéolithe.
- Plus généralement, le matériau argileux selon l'invention présente une affinité vis-à-vis du composé siliconé, finement broyé (par exemple ≤ 1 µm) ; parmi les argiles, les smectites sont préférées, puis les illites et les kaolinites.
- L'élément de construction selon l'invention a une forme choisie dans le groupe consistant en les carreaux, les panneaux et les plaques.

La présente invention concerne également une composition hydrofugeante comprenant en mélange homogène un agent d'hydrofugation comprenant un composé siliconé, et un additif minéral comprenant, d'une part un matériau argileux, non gonflant en milieu aqueux, et ne comportant pas de fonction hydroxyle ionisable en milieu aqueux, et d'autre part une silice cristalline, ledit additif minéral ayant une affinité synergique d'hydrofugation avec ledit composé siliconé, telle que précédemment définie.

L'invention concerne l'utilisation de cette composition, au sein d'un substrat de plâtre d'un élément de construction préfabriqué.

L'invention concerne également l'utilisation d'un additif minéral pour augmenter le pouvoir hydrofugeant d'un agent d'hydrofugation pour substrat à base de plâtre durci, comprenant un composé siliconé. Selon l'invention, l'additif minéral comporte au moins, d'une part un matériau argileux, non gonflant en milieu aqueux, et ne comportant pas de fonction hydroxyle ionisable en milieu aqueux, et d'autre part une silice cristalline, le dit additif minéral, ayant une affinité synergique d'hydrofugation avec ledit composé siliconé, telle que précédemment définie.

L'invention concerne aussi un procédé de fabrication d'un élément de construction comprenant un substrat à base de plâtre durci, selon lequel on obtient ledit substrat par au moins les étapes suivantes :
a) on mélange de manière homogène une matière sèche comprenant majoritairement au moins un sulfate de calcium hydratable, un agent d'hydrofugation comprenant au moins un composé siliconé, et de l'eau d'hydratation, et on préforme ce substrat à l'état humide ;
b) on sèche le substrat préformé, pour obtenir ce dernier formé à l'état solide et sec.

Selon l'invention, pendant l'étape (a) on mélange également un additif minéral, tel que précédemment défini.

Préférentiellement, les ingrédients définis dans l'étape (a) sont mélangés directement et ensemble, pour obtenir le substrat à l'état humide et préformé.

Un tel procédé peut avoir les variantes suivantes :
- l'agent d'hydrofugation est sous forme liquide, en particulier sous forme d'huile, ou de suspension aqueuse homogène, tandis que l'additif minéral est une poudre sous forme divisée ;
- l'agent d'hydrofugation est mélangé de manière homogène à la matière sèche comprenant l'additif minéral, avant le mélange de ladite matière sèche avec l'eau d'hydratation, pour obtenir le substrat préformé à l'état humide ;
- l'agent d'hydrofugation est mélangé de manière homogène à l'eau d'hydratation, avant le mélange de cette dernière avec la matière sèche comprenant l'additif minéral, pour obtenir le substrat préformé à l'état humide ;
- l'agent d'hydrofugation et l'additif minéral sont mélangés de manière homogène pour obtenir une poudre imbibée d'huile en surface, laquelle est ensuite incorporée à la matière sèche et/ou l'eau de gâchage avant leur mélange homogène, pour obtenir le substrat préformé à l'état humide ;
- l'agent d'hydrofugation, sous forme d'huile ou d'émulsion aqueuse, est dispersé de manière homogène dans l'eau de gâchage, tandis que l'additif minéral est distribué de manière homogène dans la matière sèche.

Conformément à la présente invention, on a découvert que si le mélange homogène des ingrédients définis précédemment, préalable au préformage à l'état humide du substrat, comprend également un additif minéral tel que précédemment défini, et en particulier un matériau argileux, alors cet additif minéral est susceptible de jouer un rôle rétenteur du composé siliconé réactif au sein du substrat à base de plâtre.

La solution selon l'invention présente l'avantage déterminant de demeurer compatible avec les différents procédés de fabrication des éléments de construction considérés par la présente invention, connus aujourd'hui, par exemple :
(a) par coulage d'une pâte à base de plâtre, entre deux nappes de fibres cellulosiques, sous forme carton, ou entre deux mats, tissus ou feuilles de fibres minérales ;
(b) par filtration d'une boue ("slurry") à base de fibres cellulosiques et de plâtre, selon un processus de type papetier, pour obtenir des plaques fibreuses dites GFB ;
(c) par compression dite semi-humide ou semi-sèche, selon la teneur en eau (plaques fibreuses GFB).

Appliquée à chacun de ces procédés, l'invention permet d'augmenter le rendement d'incorporation de l'agent d'hydrofugation au sein du substrat de plâtre. Par exemple, pour un procédé par filtration d'une boue, de type papetier, l'invention permet de maintenir l'agent d'hydrofugation au sein du gâteau obtenu par filtration, plutôt que de le concentrer dans le filtrat, malgré le recyclage de l'eau d'hydratation.

Dans toute la description ci-après, le terme "plâtre durci" ou "plâtre" sera réservé à du sulfate de calcium dihydraté (CaSO₄, 2H₂O), ou gypse régénéré.

Par "sulfate de calcium hydratable", on entend un composé minéral ou une composition, consistant en ou comprenant un sulfate de calcium anhydre (anhydrite II ou III), un sulfate de calcium hémi-hydraté (CaSO₄, 1/2H₂O), quelle que soit la forme cristalline, α ou β, de ce dernier.

Par "composé siliconé", on entend tout composé susceptible d'être obtenu par polymérisation d'un motif monomère de type silicone, qu'il s'agisse par exemple d'un chlorosilane, d'un siliconate, d'un alcoxysilane, ou d'un silanol.

Par "fibres cellulosiques", on entend des éléments discrets tels que fibres, filaments et copeaux, à base de cellulose naturelle, régénérée, recyclée, ou modifiée ; préférentiellement les fibres cellulosiques considérées sont celles entrant de manière générale dans la composition des papiers et cartons.

Par "fibres minérales", on entend des fibres inorganiques, par exemple fibres de verre, traitées ou non pour demeurer inertes et stables chimiquement une fois incorporées dans le substrat de plâtre durci des éléments de construction préfabriqués considérés par la présente invention.

Comme on le sait, la dolomie est un carbonate mixte de calcium et de magnésium.

Dans toute la présente description, sauf s'il en est disposé autrement, toutes les compositions sont exprimées par rapport au poids total de la matière sèche introduite, y compris agent d'hydrofugation. Ces compositions peuvent être aisément transposées par rapport au poids final de l'élément de construction préfabriqué, fini et sec, en tenant compte de l'eau de réhydratation du sulfate de calcium.

Conformément à la présente invention, l'additif minéral mis en oeuvre ne développe pas à lui seul en milieu aqueux un pH alcalin. Ceci exclut à titre de composant minéral, tout matériau susceptible de libérer en milieu aqueux des ions OH par exemple :
a) une base minérale, comme du dihydroxyde de calcium ;
ou b) un silicate métallique, par exemple sans ions hydroxyles, par exemple un silicate de calcium, tel que vendu sous la référence CPA 52,5 CP2 de LAFARGE ;
ou c) un aluminate, par exemple un aluminate de calcium, tel que vendu sous la référence SECAR 80 de LAFARGE.

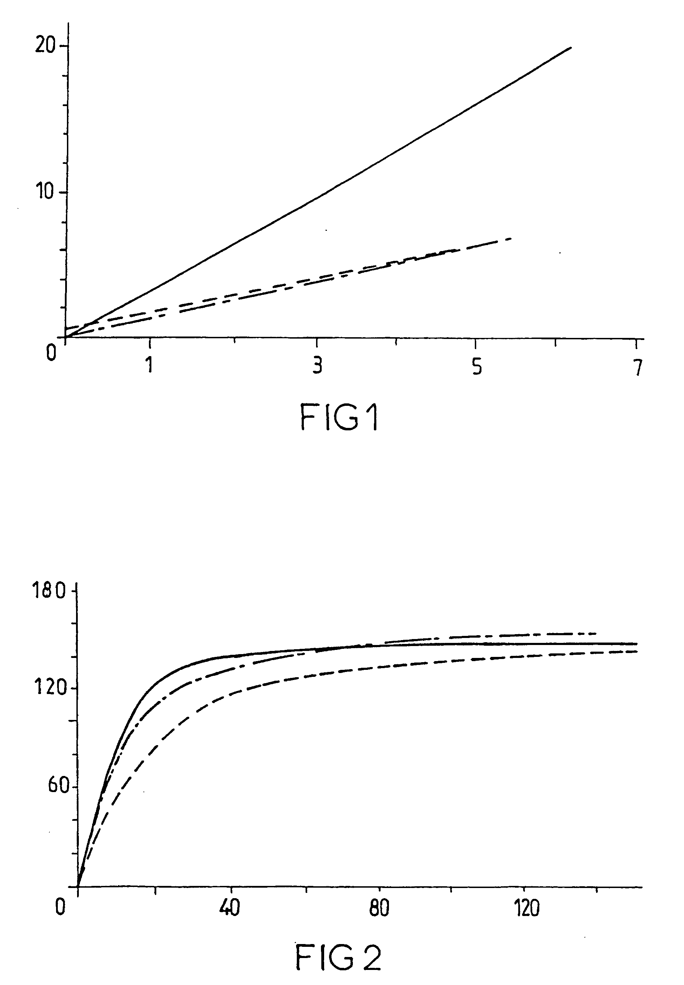

A cet égard, on se référera à la figure 1, qui montre le dégagement d'hydrogène (sous pression atmosphérique et à 23°C), pour trois mélanges selon la représentation suivante :
- le trait plein correspond à un mélange de 0,1g Ca(OH)₂ + 0,1g de MHPS (BS94 de Wacker) + 65 ml d'eau
- le trait en pointillé correspond à un mélange de 1,72g d'un silicate de calcium (réf. commerciale précitée), + 0,1g de MHPS (BS94 de Wacker) + 65 ml d'eau
- le trait mixte correspond à un mélange de 1,72g d'un aluminate de calcium (réf. commerciale précitée), + 0,1g de MHPS (BS94 de Wacker) + 65 ml d'eau.

Le volume exprimé en ml est en abcisses et le temps de mise en contact, en heures, est en ordonnées.

En effet, il suffit de mélanger l'un quelconque des composants minéraux précités (a) à (c) avec un composé siliconé réactif, par exemple méthylhydrogenopolysiloxane (MHPS en abrégé), en milieu aqueux, pour constater immédiatement un violent et important dégagement d'hydrogène.

Comme précédemment indiqué, un composant minéral réactif du type bentonite apparaît exclu pour la fabrication de certains éléments de construction comprenant un substrat à base de plâtre durci, tels que plaques de plâtre.

### EXEMPLE 1 :

L'exemple donné ci-après illustre, pour des plaques de plâtre, les problèmes d'étalement du substrat à l'état humide, ou pâte, de liaison entre le substrat de plâtre durci et les feuilles de fibres cellulosiques, ou carton, et d'allongement du temps de séchage, générés par l'emploi de bentonite.

### Mode opératoire :

Des plaques ont été fabriquées sur une ligne de production de laboratoire, par coulage entre deux feuilles de carton, et séchage selon la profil de séchage approprié sans calciner le plâtre durci.

L'agent d'hydrofugration utilisé est sous forme d'huile de silicone (MHPS) (Wacker BS 94).

Les déterminations suivantes ont été faites tout au long du processus de fabrication :
- Etalement : mesure en millimètres suivant deux directions perpendiculaires du diamètre d'une galette, après étalement sur une plaque de verre. La galette est obtenue par soulèvement vertical d'un moule cylindrique de diamètre intérieur 60 mm ± 0,1 mm et de hauteur ± 0,1 mm, rempli de la pâte pour plaque de plâtre. Le temps pour soulever le moule est identique à celui du coulage de la pâte entre les deux feuilles de carton.
- Liaison cisaille : il s'agit du temps nécessaire pour que la cristallisation du plâtre pris se caractérise par une adhésion au papier lors d'un essai de pelage. Cette liaison doit être suffisante pour pouvoir introduire une plaque de plâtre dans un séchoir industriel, sans risquer le décollement du carton.
- Temps de séchage : temps nécessaire pour atteindre au moins 0,2 % d'humidité à l'intérieur des plaques séchées, selon le profil approprié, sans calciner le plâtre durci.
- Liaison sèche : lors d'un essai de pelage d'une plaque contenant moins de 0,2 % d'humidité, la qualité de l'accrochage entre le plâtre pris et le papier doit être parfaite et ne laisser apparaître aucune trace de plâtre pris. En cas de mauvaise liaison, la mesure est exprimée en quantité d'apparition de plâtre pris.

Les résultats obtenus sont rassemblés dans le tableau A ci-après.

**TABLEAU A**

| | Additif minéral | Quantité d'additif minéral (g) | Etalement (mm) | Liaison cisaille (min.) | Temps de séchage (min.) | Liaison sèche (% d'apparition de plâtre pris) |
|---|---|---|---|---|---|---|
| RG1842 | aucun | | 180 | 7 | 49 | 0 |
| RG1843 | (*) | 113 | 194 | 8 | 49 | 0 |
| RG1844 | bentonite | 113 | 110 | > 12 | 69 | 56 |

| | | | | | | |
|---|---|---|---|---|---|---|
| (*) composition A du Tableau 1 ci-après. | | | | | | |

### EXEMPLE 2 :

Pour la fabrication de plaques dites GFB, de densité 1,1, on a testé la filtrabilité sous une dépression de 0,2 bar, de trois pâtes obtenues par mélange respectivement de :
1) 133 g de sulfate de calcium hydratable (semi-hydrate) ; 12 g de pulpe sèche, et 388 g d'eau ;
2) 133 g de sulfate de calcium hydratable (sulfo-gypse), 12 g de pulpe sèche, 15,78 g d'un matériau argileux non gonflant de composition X du Tableau 1 ci-après, et 388 g d'eau ;
3) 133 g de sulfate de calcium hydratable (sulfo-gypse), 12 g de pulpe sèche, 15,78 g de bentonite, et 388 g d'eau.

La filtrabilité de la pâte (« slurry »), ayant une densité de 1,1, sous dépression de 0,2 bars, est montrée par le graphique selon la Figure 2, dans lequel les ordonnées représentent le volume du filtrat exprimé en ml, et les abscisses le temps de filtration exprimé en secondes. Le tableau de correspondances suivant doit être établi :
- le trait plein correspond à la pâte selon (1)
- le trait mixte correspond à la pâte selon (2)
- et le trait en pointillé à la pâte selon (3).

Quelle que soit la durée de filtration, le volume d'eau récupéré pour le mélange (3) est bien inférieur à celui récupéré pour les mélanges (1) et (2), du même ordre de grandeur pour (1) et (2). Ainsi, au bout de 20 s, 80 ml d'eau sont seulement récupérés du mélange (3), pour 110 et 120 ml respectivement pour les mélanges (2) et (1).

### EXEMPLE 3 :

Cet exemple est particulièrement important, en ce qu'il montre, d'un côté la réaction chimique existant entre un MHPS et un additif minéral traditionnel, et de l'autre côté l'absence de réaction chimique existant entre le même MHPS et un matériau argileux.

A cette fin, 0,1 g de MHPS (référence BS94 de Wacker), dans 85 ml d'eau sont mélangés respectivement avec 0,1 g de Ca (OH)2, et 1,8 g d'un matériau argileux, à savoir la composition X selon le Tableau 1.

Dans le premier cas, on obtient un dégagement d'hydrogène continu, et dans le second cas, une absence de dégagement d'hydrogène, conformément au graphique selon la Figure 1.

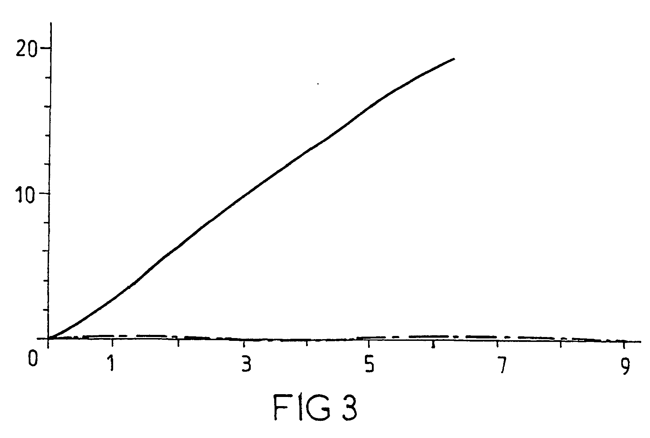

Ceci est représenté à la Figure 3 avec les mêmes conventions qu'à la Figure 1.

Le trait plein représente le dégament d'hydrogène du premier mélange, et le trait mixte le dégagement du second mélange.

Les formulations des compositions (X) et (Z) d'additif minéral sont données dans le tableau 1 ci-après, en pourcentage pondéral.

**TABLEAU 1**

| | Composition X | Composition Z |
|---|---|---|
| Composition minéralogique en (%) | | |
| Kaolin | 25 | 30 |
| Illite | 10 | 25 |
| Quartz | 15 | 45 |
| Dolomie | 50 | 0 |

| Composition chimique calcinée (%) | | |
|---|---|---|
| SiO2 | 43 | 72,4 |
| TiO2 | 1,1 | 1,6 |
| Al2O3 | 15 | 21,5 |
| Fe2O3 | 1,6 | 1,5 |
| K2O | 1,2 | 2,1 |
| CaO | 23 | 0,2 |
| MgO | 14 | 0,3 |
| Granulométrie | | |
| Refus à 63 µm | < 15 % | < 1,7 % |
| Perte au feu à 900°C | 26,5 % | 5,7 % |

### EXEMPLE 4 :

Hydrofugation de plaques en plâtre durci, avec des méthylhydrogénopolysiloxanes sous forme d'huiles.

### 4.1/ Plaques fibreuses (fibres cellulosiques) GFB avec et sans filtration

### 4.1.1/ Plaques fibreuses GFB lourdes, obtenues avec filtration selon un procédé "papetier"

La plaque est fabriquée selon les étapes successives suivantes :

Préparation d'une pulpe, par mélange de 8 litres d'eau (du robinet ou d'eau issue du recyclage du filtrat de plaques de même formulation) avec 273 g de papier journal, puis pulpage avec un mélangeur RAYNERI® modèle Turbotest 207370, pendant 20 minutes à vitesse 6, puis pendant 25 minutes à vitesse 10.

Pesage d'une quantité de 2400 g de pulpe dans un bol HOBART® modèle N-50G, soit environ 2321 g d'eau et 79 g de pulpe sèche.

Introduction d'une quantité variable selon les essais (voir Tableau 2), de méthylhydrogénopolysiloxane de référence 1107 de la Société DOW CHEMICAL, ou référence MH 15 de la Société BAYER.

Pesage, dans un récipient séparé, d'une quantité de 800 g de sulfate de calcium hydratable (CaSO₄, 1/2 H₂O), obtenu par cuisson d'un gypse naturel ou d'un sulfogypse issu de la désulfuration de fumées.

Introduction dans ce sulfate de calcium hydratable, et mélange par un moyen mécanique approprié d'une quantité variable selon les essais (voir Tableau 2), d'additif minéral de composition (X) ou (Z).

Introduction du sulfate de calcium hydratable ainsi adjuvanté dans le bol HOBART®, et malaxage à la vitesse 1 pendant 15 secondes avec une pâle N5B NSF. Raclage pendant 15 secondes et malaxage à la vitesse 1 pendant 90 secondes.

Dépose de la suspension de plâtre ainsi obtenue dans un moule muni d'une toile perméable, de dimensions 25,5 x 25,5 cm² ou 60 x 40 cm², selon la taille de la plaque désirée.

Pressage mécanique jusqu'à obtention d'un gâteau d'environ 12,5 mm d'épaisseur.

Application de la pression pendant au moins 20 secondes, pour évacuer l'air et l'eau à travers la toile de filtration.

### Démoulage.

Conservation à température ambiante jusqu'à hydratation complète du sulfate de calcium hydratable.

Séchage du plâtre avec un profil de température approprié, sans calciner le plâtre durci.

Le Tableau 2 suivant résume les caractéristiques des plaques GFB ayant une épaisseur d'environ 12,5 mm fabriquées avec ce protocole dans un moule de dimensions 25,5 x 25,5 cm².

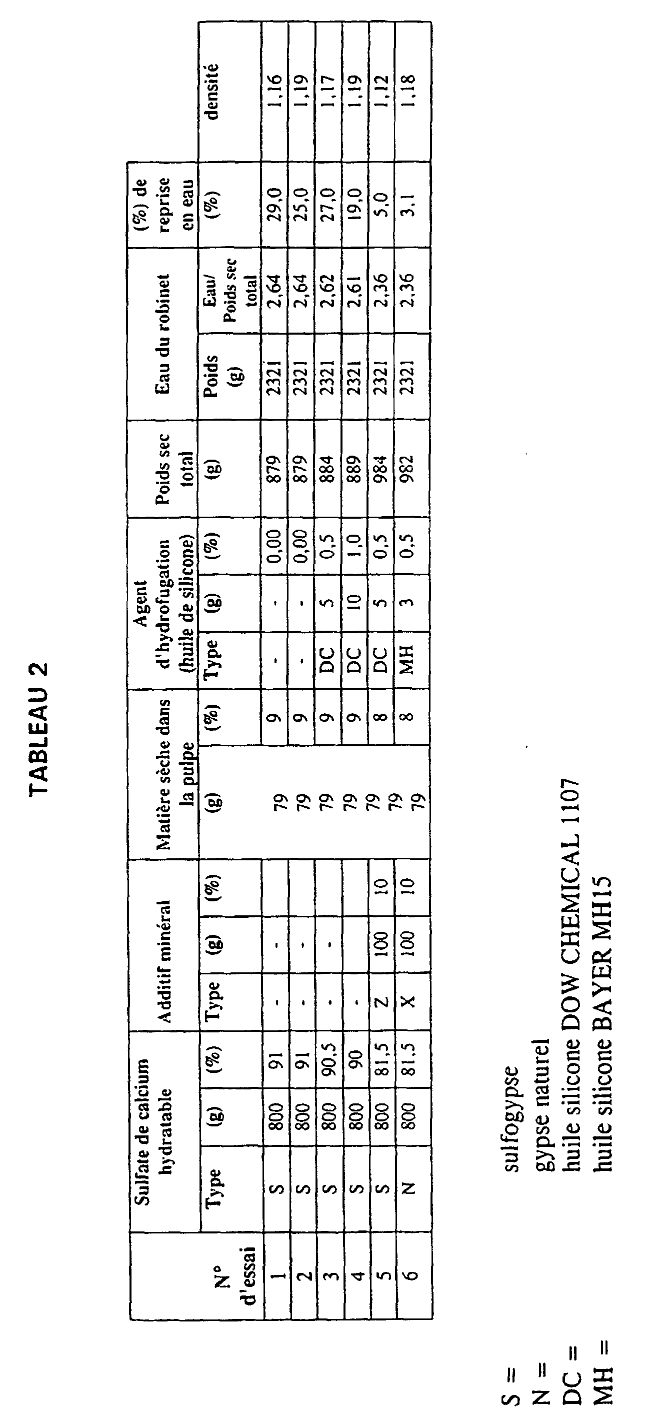

Le pourcentage de reprise d'eau à 2 heures, est mesuré selon la norme ASTM 630/630M-96a, mais sur des échantillons de dimension 10 x 10 cm², quand la norme préconise des échantillons d'un pied carré. Les résultats obtenus selon ce protocole sont moins favorables que les résultats que l'on aurait obtenus avec des échantillons de dimensions conformes à la norme.

Les essais 1 et 2 sont des témoins : les plaques non hydrofugées ont des pourcentages de reprise d'eau élevé. On constate que lorsque l'on n'utilise pas d'additif minéral, (essais 3 et 4), les résultats d'hydrofugation ne sont pas bons, même en présence d'agent d'hydrofugation. En revanche, dès qu'on utilise un additif minéral selon l'invention, on obtient des reprises d'eau très inférieures et conformes à la norme.

### 4.1.2 Plaques fibreuses (fibres cellulosiques) GFB légères, obtenues avec filtration selon un procédé papetier.

La plaque est fabriquée selon les étapes successives suivantes :
- Préparation d'une pulpe, par mélange de 8 litres d'eau (du robinet ou issue du recyclage du filtre de plaques de même formulation) avec 273 g de papier journal, puis pulpage avec un mélangeur Rayneri modèle Turbotest 207370 pendant 20 minutes à vitesse 5, puis pendant 25 minutes à vitesse 10.
- Pesage d'une quantité de 2083.5 g de pulpe dans un bol Hobart modèle N-50G, soit environ 2021 g d'eau et 62,5 g de pulpe sèche.
- Introduction de 2,7 g de méthylhydrogénopolysiloxane de référence BS94 de la Société Wacker et mélange pendant 2 minutes.
- Introduction d'une quantité de 53,4 g d'additif X (cf. tableau 1) et mélange pendant 5 minutes.
- Pesage, dans un récipient séparé, d'une quantité de 250 g de sulfate de calcium Hydratable (CaSO4, H2O), obtenu par cuisson d'un gypse naturel ou d'un sulfogypse issu de la désulfuration des fumées.
- Introduction du sulfate de calcium dans le bol de Hobart, et malaxage à la vitesse 1 pendant 15 secondes avec une pâle N5B NSF. Raclage pendant 15 secondes et malaxage à la vitesse 1 pendant 90 secondes.

Les essais 1 et 2 sont des témoins : les plaques non hydrofugées ont des pourcentages de reprise d'eau élevé. On constate que lorsque l'on n'utilise pas d'additif minéral, (essais 3 et 4), les résultats d'hydrofugation ne sont pas bons, même en présence d'agent d'hydrofugation. En revanche, dès qu'on utilise un additif minéral selon l'invention, on obtient des reprises d'eau très inférieures et conformes à la norme.

Les résultats suivants sont obtenus, selon le Tableau 3.

**TABLEAU 3**

| **N° Essai** | **Sulface de Ca Hydratable** | | **Additif minéral Matière Sèche dans la pulpe** | | **Matière sèche dans la Pulpe** | **Agent d'hydrofugation** | | **Poids sec total** | **Eau du Robinet** | **Densité** | **% de reprise d'eau** |
|---|---|---|---|---|---|---|---|---|---|---|---|
| | Type | (g) | | (g) | | Type | (g) | (g) | 5G° | | (%) |
| | | | | | | | | | | | |
| 1 | S | 250 | | | 62.5 | | | 312.5 | 2021 | 0,45 | 147 |
| MP9907 5 | S | 250 | | | 62.5 | BS94 | 2.7 | 315.2 | 2021 | 0,40 | 119 |
| MP9907 8 | S | 250 | * | 53.4 | 62.5 | BS94 | 2.7 | 369 | 2021 | 0,45 | 4.8 |

| | | | | | | | | | | | |
|---|---|---|---|---|---|---|---|---|---|---|---|
| * Composition X selon le Tableau 1 | | | | | | | | | | | |

### 4.2 Fabrication de plaques fibrées (fibres cellulosiques) GFB, par compression selon un procédé semi-humide ou semi-sec.

La plaque est fabriquée selon les étapes suivantes :
- Préparation d'une bourre de papier par broyage de papiers journaux dans un appareil de type Pallman.
- Pesage d'une quantité de bourre et introduction dans un lodige de type M20G.RE ou M5G.
- Pesage d'une quantité variable selon les essais d'additif minéral de formule Z ou X.
- Pulvérisation du méthylhydrogénopolysiloxane sur l'additif minéral.
- Introduction du mélange obtenu dans le lodige de type M20G.RE ou MSG et malaxage de façon à obtenir un mélange homogène.
- Pesage, dans un récipient séparé, d'une quantité de sulfate de calcium hydratable naturel ou issu de la désulfuration de fumées:

- Introduction de ce sulfate de calcium hydratable dans le lodige de type M20R.GE ou M5G et malaxage de façon à faire un mélange homogène.
- Dépose du mélange homogène ci-dessus dans un moule de dimensions 40x40 cm² et pulvérisation d'une quantité d'eau.
- Pressage avec une presse de type KRATOS 50 tonnes à pompe séparée de réf. PKPS jusqu'à obtention d'un gâteau de 12.5 mm d'épaisseur.
- Application de la pression pendant au moins 20 secondes pour évacuer l'eau à travers la toile de drainage qui se situe dans la partie inférieure du moule.
- Démoulage.
- Conservation à température ambiante pendant au plus 1 h 30, jusqu'à hydratation complète du plâtre .
- Séchage avec un profil de température approprié sans calciner le plâtre pris.

Remarque : dans le cas de la fabrication d'une plaqué sans additif minéral, le méthylhydrogénopolysiloxane est introduit dans l'eau.

Le tableau suivant résume les caractéristiques des panneaux d'environ 13mm, fabriqués avec ce protocole dans un moule de dimensions 40x40 cm².

**TABLEAU 3 BIS**

| **N° d'essai** | **Sulfate de calcium hydratable** | | **Additif minéral** | | **Agent d'hydrofugation (huile de silicone)** | | **Poids total** | **Eau du robinet** | | **(%) de reprise en eau à 2 h** |
|---|---|---|---|---|---|---|---|---|---|---|
| | Type | (g) | Type | (g) | Type | (g) | (g) | Poids (g) | Rapport eau/ poids sec | (%) |
| 1 | S | 1993 | | | | | 2430 | 1380 | 0.57 | 30.5 |
| 2 | S | 1993 | | | MH | 13 | 2006 | 1380 | 0.56 | 25 |
| 13 | S | 1886 | X | 130 | MH | 13 | 2443 | 1380 | 0.56 | 2 |

La mesure de la reprise d'eau à 2 heures s'effectue comme précédemment.

On constate que les résultats de reprise d'eau sont meilleurs lorsque les plaques sont fabriquées avec un agent d'hydrofugation et un additif minéral, conformes à l'invention.

### 4.3/ Plaques de plâtre dites GKF

Des plaques dites GKF, par conséquent résistantes au feu, c'est-à-dire comprenant un substrat de plâtre durci dont les faces sont revêtues avec un carton, ont été fabriquées sur une ligne de production industrielle, par coulage de plâtre entre deux feuilles de carton. L'agent d'hydrofugation utilisé est sous forme d'huile de silicone (WACKER BS94).

Les résultats suivants sont obtenus, selon le Tableau 4.

**TABLEAU 4**

| **Composé siliconé* en % du poids de la plaque finie** | **Additif minéral (X) en % du poids final de la plaque** | **Reprise d'eau après immersion 2 h sur échantillons 30x30 cm** |
|---|---|---|
| 0.42 % | 0% | 16.8% |
| 0.36 % | 3.72 % | 5.5% |
| 0.36% | 7.18% | 4.25 % |

| | | |
|---|---|---|
| * Référence commerciale WACKER® BS94 | | |

### 4.4/ Fabrication d'éléments moulés renforcés hydrofugés obtenus par compression à sec, avec divers modes d'introduction de l'agent d'hydrofugation.

Cet exemple illustre la fabrication d'éprouvettes de dimensions 2 x 2 x 18 cm, au cours de laquelle une huile de silicone est appliquée sur différents supports, afin d'hydrofuger un élément en plâtre durci, avec ou sans fibres.

Les produits et conditions suivantes ont été utilisés :
* Matières sèches :
   Sulfate de calcium hydratable : plâtre issu de la cuisson d'un gypse naturel, ayant un pH de 7,22 mesuré à 10% en suspension et après 10 minutes d'agitation.
* Additif minéral :
   - Composition X ou Z
   - Silice Quartz C400, de la Société SIFRACO
   - Dolomie de la Société LHOIST
   - Fibres cellulosiques identiques à celles. selon l'exemple 1.2
* Composé siliconé : huile de silicone (méthylhydrogénopolysiloxane), sous forme oligomérique d'environ 40 motifs, commercialisée sous la dénomination MH15 par Bayer®
   Conditions opératoires :
   * Pulvérisation de l'huile de silicone sur le support d'hydrofugation, à savoir le sulfate de calcium hydratable, ou l'additif minéral, ou les fibres cellulosiques. Le composé siliconé est introduit à raison de 0,5 % du poids de la matière sèche totale introduite. La quantité du support d'hydrofugation est variable selon les essais (cf. Tableau 5).
   * Mélange pendant une minute dans un mélangeur HOBART.
   * Mélange pendant 30 secondes avec l'eau d'hydratation (rapport eau d'hydratation / matière sèche (E/S) de 0,6.
   * Remplissage du moule.
   * Démoulage après 30 minutes, puis conservation pendant 4 heures en sac plastique.
   * Séchage à 40°C jusqu'à poids constant.
   * Conditionnement à 23°C et 50% HR.

La reprise d'eau est mesurée, après immersion pendant 2 heures, sur deux éprouvettes, de manière identique aux conditions décrites à l'exemple 1.1.

Les résultats sur la reprise d'eau des éprouvettes témoins et hydrofugées selon l'invention, sont rassemblés dans le Tableau 5 suivant.

Lorsqu'il y a des additifs minéraux ou des fibres, les quantités sont exprimées ici en pourcentage de la matière sèche introduite totale.

**TABLEAU 5**

| | **Additif minéral (%)** | **Fibres cellulosiques (%)** | **Reprise d'eau à 2 h** |
|---|---|---|---|
| TS1 | - | - | 5.3 |
| | | | 7.3 |
| TS2 | - | - | 5.2 |
| | | | 6.0 |
| Z + S | 10 | - | 1.9 |
| | | | 2.5 |
| X + S | 10 | - | 4.4 |
| | | | 4.5 |
| C400 + S | 10 | - | 9.8 |
| | | | 10.1 |
| F + S | - | 5 | 22.5 |
| | | | 22.8 |
| D + S | 10 | - | 7.3 |
| | | | 8.7 |
| TS1 et TS2 sont des essais d'éprouvettes hydrofugées avec la même proportion de composé siliconé introduit directement dans la suspension de plâtre. | | | |
| Z + S : le silicone est pulvérisé sur l'additif minéral de composition Z. | | | |
| X = S : le silicone est pulvérisé sur l'additif minéral de composition X. | | | |
| C400 + S : le silicone est pulvérisé sur l'additif minéral quartz C400 de SIFRACO. | | | |
| F + S : le silicone est pulvérisé sur les fibres de renfort cellulosiques. | | | |
| D + S : le silicone est pulvérisé sur l'additif minéral dolomie. | | | |

On remarque ici aussi que les meilleurs résultats sont obtenus, par rapport aux témoins, lorsque l'on utilise des additifs minéraux de composition X et Z.

## Revendications

1. Elément de construction préfabriqué résistant à l'eau, Comprenant un substrat à base de plâtre durci, ledit substrat étant susceptible d'être obtenu par au moins les étapes suivantes :
(a) mélange homogène d'une matière sèche comprenant majoritairement au moins un sulfate de calcium hydratable, d'un agent d'hydrofugation comprenant au moins un composé siliconé, et d'eau, et préformage à l'état humide dudit substrat ;
(b) séchage du substrat préformé, pour obtenir ledit substrat formé à l'état solide et sec ;
**caractérisé en ce que** le mélange homogène, préalable au préformage à l'état humide du substrat, comprend également un additif minéral comprenant, d'une part un matériau argileux, non gonflant en milieu aqueux, et ne comportant pas de fonction hydroxyle ionisable en milieu aqueux, et d'autre part une silice cristalline, ledit additif minéral ayant une affinité synergique d'hydrofugation avec ledit composé siliconé, au sens où grâce à l'ajout de l'additif minéral dans le mélange homogène, l'hydrofugation du substrat à l'état solide et sec se trouve augmentée d'au moins 20 %, en équivalent Cobb, selon la norme ASTM 630/630M-96a, et/ou pour la même hydrofugation (ou résistance à l'eau), la quantité d'agent d'hydrofugation requise est diminuée d'au moins 20 %.

2. Elément selon la revendication 1, **caractérisé en ce que** le matériau argileux ne réagit pratiquement pas avec le composé siliconé, au sens où, au bout de deux heures, le mélange de 0,1g du composé siliconé avec ledit matériaux argileux, en milieu aqueux, dans les mêmes proportions pondérales que celles utilisées pour la fabrication de l'élément de construction préfabriqué, dégage éventuellement une quantité d'hydrogène inférieure ou égale à 6ml.

3. Elément selon la revendication 2, **caractérisé en ce que** le composé siliconé et le matériau argileux sont susceptibles de former entre eux, en milieu acide ou neutre, au moins une liaison hydrogène, entre d'un côté l'hydrogène d'une fonction hydroxyle non ionisable du matériau argileux, et de l'autre côté, l'oxygène du composé siliconé.

4. Elément selon la revendication 3, **caractérisé en ce que** le matériau argileux comprend un alumino-silicate, par exemple une illite et/ou un kaolin.

5. Elément selon la revendication 1, **caractérisé en ce que** l'additif minéral comporte aussi un complément minéral inerte, compatible avec le matériau argileux

6. Elément selon la revendication 1, **caractérisé en ce que** le composé siliconé réactif est un composé hydrofuge macromoléculaire, linéaire, cyclisé ou ramifié, comportant des motifs polysiloxaniques, dont chacun est choisi dans le groupe constitué par les motifs (R₁R₂R₃SiO_{1/2}), (R₁R₂SiO), (R₂SiO_{3/2}), avec :
- R₁ = H,Cl, ou tout autre halogène, ou alcoxy
- R₂ = un phényle ou alkyle, ramifié ou non
- R₃ = un phényle ou alkyle, ramifié ou non.

7. Elément selon la revendication 6, **caractérisé en ce que** le composé siliconé est un alkylhydrogénopolysiloxane, par exemple le méthylhydrogénopolysiloxane.

8. Elément selon la revendication 1, **caractérisé en ce que** le composé siliconé représente une proportion pondérale de la matière sèche totale introduite, au moins égale à 0,1 % et de préférence comprise entre 0, 1 et 1 %.

9. Elément selon la revendication 1, **caractérisé en ce que** l'additif minéral a une granulométrie telle que les particules ayant une taille inférieure ou égale à 63 µm représentent une proportion pondérale au moins égale à 85 % dudit additif minéral.

10. Elément selon la revendication 1, **caractérisé en ce que** l'additif minéral a une perte au feu à 900°C inférieure à 30 %.

11. Elément selon la revendication 1, **caractérisé en ce que** l'additif minéral représente une proportion du poids total des ingrédients, hors eau, au moins égale à 5 %, et préférentiellement au plus égale à 15 %.

12. Elément de construction selon la revendication 1, **caractérisé en ce que**, l'additif minéral dispersé dans le substrat de plâtre durci comporte un matériau argileux, une silice cristalline, et un complément minéral inerte, compatible avec le matériau argileux.

13. Elément selon la revendication 11, **caractérisé en ce que** l'additif minéral comporte de la dolomie à titre de complément minéral.

14. Elément selon la revendication 12, **caractérisé en ce que** l'additif minéral comporte en proportions pondérales sensiblement égales, le matériau argileux, la silice cristalline, et le complément minéral inerte.

15. Elément de construction selon la revendication 1, **caractérisé en ce que** la composition pondérale dudit additif minéral dans la matière sèche, en combinaison avec la quantité de l'agent d'hydrofugation, est adaptée pour conférer audit élément de construction une résistance à l'eau conforme aux normes ASTM 630/630M-96a.

16. Elément de construction selon la revendication 1, **caractérisé en ce que** composition pondérale dudit additif minéral dans la matière sèche, est adaptée pour conférer audit élément de construction également une résistance au feu conforme aux normes allemandes DIN 18180 et 4102 (partie IV), relatives à une plaque dite GKF.

17. Elément selon la revendication 1, ayant la forme d'une plaque, **caractérisé en ce que** les deux faces du substrat de plâtre durci sont revêtues par deux feuilles de fibres cellulosiques, par exemple de carton.

18. Elément selon la revendication 1, ayant la forme d'une plaque, **caractérisé en ce que** des fibres de renfort cellulosique sont distribuées dans le substrat de plâtre durci, par exemple plaque fibreuse dite "GFB"

19. Elément selon la revendication 1, **caractérisé en ce que** des fibres minérales compatibles avec le sulfate de calcium hydratable, par exemple des fibres de verre, sont distribuées dans le substrat de plâtre durci, dans une proportion pondérale inférieure à 1 % de la matière sèche.

20. Composition hydrofugeante, pour substrat à base de plâtre durci, comprenant en mélange homogène un agent d'hydrofugation comprenant un composé siliconé, et un additif minéral comprenant, d'une part un matériau argileux, non gonflant en milieu aqueux, et ne comportant pas de fonction hydroxyle ionisable en milieu aqueux, et d'autre part une silice cristalline, le dit additif minéral ayant une affinité synergique d'hydrofugation avec ledit composé siliconé, au sens où, grâce à l'ajout de l'additif minéral dans la composition hydrofugeante, l'hydrofugation obtenue pour ledit substrat se trouve augmentée d'au moins 20 %, en équivalent Cobb, selon la norme ASTM 630/630M-96a, et/ou pour la même hydrofugation (ou résistance à l'eau), la quantité d'agent d'hydrofugation requise est diminuée d'au moins 20 %

21. Composition selon la revendication 20, **caractérisé en ce que** le composé siliconé et le matériaux argileux sont susceptibles de former entre eux, en milieu acide ou neutre, au moins une liaison hydrogène, entre d'un côté l'hydrogène d'une fonction hydroxyle non ionisable du matériaux argileux, et de l'autre côté, l'oxygène du composé siliconé.

22. Utilisation d'un additif minéral, pour augmenter le pouvoir, hydrofugeant d'un agent d'hydrofugation pour substrat à base de plâtre durci, comprenant un composé siliconé, **caractérisée en ce que** ledit additif minéral comprend, d'une part un matériau argileux, non gonflant en milieu aqueux, et ne comportant pas de fonction hydroxyle ionisable en milieu aqueux, et d'autre part une silice cristalline, ledit additif minéral ayant une affinité synergique d'hydrofugation avec ledit composé siliconé, au sens où, grâce à l'ajout de l'additif minéral dans la composition hydrofugeante, l'hydrofugation obtenue pour ledit substrat se trouve augmentée d'au moins 20 %, en équivalent Cobb, selon la norme ASTM 630/630M-96a, et/ou pour la même hydrofugation (ou résistance à l'eau), la quantité d'agent d'hydrofugation requise est diminuée d'au moins 20 %.

23. Procédé de fabrication d'un élément de construction comprenant un substrat à base de plâtre durci, selon lequel on obtient ledit substrat par au moins les étapes suivantes :
a) on mélange de manière homogène une matière sèche comprenant majoritairement au moins un sulfate de calcium hydratable, un agent d'hydrofugation comprenant au moins un composé siliconé, et de l'eau d'hydratation, et on préforme ce substrat à l'état humide ;
b) on sèche le substrat préformé, pour obtenir ce dernier formé à l'état solide et sec ;
**caractérisé en ce que**, pendant l'étape (a) on mélange également un additif minéral, comprenant, d'une part un matériau argileux, non gonflant en milieu aqueux et ne comportant pas de fonction hydroxyle ionisable en milieu aqueux, et d'autre part une silice cristalline, ledit additif minéral ayant une affinité synergique d'hydrofugation avec ledit composé siliconé, au sens où, grâce à l'ajout de l'additif minéral dans la composition hydrofugeante, l'hydrofugation obtenue pour ledit substrat se trouve augmentée d'au moins 20 %, en équivalent Cobb, selon la norme ASTM 630/630M-96a, et/ou pour la même hydrofugation (ou résistance à l'eau), la quantité d'agent d'hydrofugation requise est diminuée d'au moins 20 %.

24. Procédé selon la revendication 23, pour obtenir une plaque fibreuse "GFB", **caractérisé en ce que** le procédé mis en oeuvre est de type papetier avec filtration.

25. Procédé selon la revendication 24, **caractérisé en ce que** le procédé comporte une compression dite semi-humide ou semi-sèche.

26. Utilisation d'une composition hydrofugeante selon la revendication 20, au sein d'un substrat de plâtre d'un élément de construction préfabriqué.

## Claims

1. Water-resistant prefabricated structural element comprising a substrate based on cured plaster, the said substrate being able to be obtained by at least the following steps:
(a) homogeneously mixing a dry material, comprising mostly at least one hydratable calcium sulfate, a water-repellent agent comprising at least one silicone compound, and water and preforming the said substrate in the wet state;
(b) drying the preformed substrate in order to obtain the said substrate formed in the solid and dry state;
**characterized in that** the homogeneous mix, prior to the preforming of the substrate in the wet state, also includes a mineral additive comprising, on the one hand, a clayey material, which does not swell in aqueous medium and does not have a hydroxyl functional group ionizable in aqueous medium, and, on the other hand, a crystalline silica, the said mineral additive, having a synergistic water- repellency affinity with the said silicone compound, in the sense that, by virtue of adding the mineral additive to the homogeneous mix, the water repellency of the substrate in the solid and dry state is increased by at least 20%, in equivalent Cobb, according to the ASTM 630/630M-96a standard, and/or for the same water repellency (or water resistance) the amount of water-repellent agent required is reduced by at least 20%.

2. Element according to Claim 1, **characterized in that** the clayey material hardly reacts at all with the silicone compound, in the sense that, after two hours, mixing of 0.1 g of the silicone compound with the said clayey material in aqueous medium, in the same proportions by weight as those used for the manufacture of the prefabricated structural element, may release an amount of hydrogen of less than or equal to 6 ml.

3. Element according to Claim 2, **characterized in that** the silicone compound and the clayey material are able to form between them, in acid or neutral medium, at least one hydrogen bond between, on one side, the hydrogen of a non-ionizable hydroxyl functional group of the clayey material and, on the other side, the oxygen of the silicone compound.

4. Element according to Claim 3, **characterized in that** the clayey material comprises an aluminosilicate, for example an illite and/or a kaolin.

5. Element according to Claim 1, **characterized in that** the mineral additive also includes an inert mineral supplement compatible with the clayey material.

6. Element according to Claim 1, **characterized in that** the reactive silicone compound is a linear, cyclized or branched macromolecular water-repellent compound containing polysiloxane units, each of which is chosen from the group consisting of the groups (R₁R₂R₃SiO_{1/2}), (R₁R₂SiO) and (R₂SiO_{3/2}), with:
- R₁ = H, C1, or any other halogen, or an alkoxy
- R₂ = a branched or unbranched phenyl or alkyl
- R₃ = a branched or unbranched phenyl or alkyl.

7. Element according to Claim 6, **characterized in that** the silicone compound is an alkyl hydrogeno-polysiloxane, for example methyl hydrogeno-polysiloxane.

8. Element according to Claim 1, **characterized in that** the silicone compound represents a proportion by weight of the total dry matter introduced of at least 0.1% and preferably between 0.1 and 1%.

9. Element according to Claim 1, **characterized in that** the mineral additive has a particle size distribution such that the particles having a size of less than or equal to 63 µm represent a proportion by weight of at least 85°s of the said mineral additive.

10. Element according to Claim 1, **characterized in that** the mineral additive has a loss on ignition at 900°C of less than 30%.

11. Element according to Claim 1, **characterized in that** the mineral additive represents a proportion of the total weight of the ingredients, excluding water, of at least 5% and preferably at most 15%.

12. Structural element according to Claim 1, **characterized in that** the mineral additive dispersed in the cured-plaster substrate comprises a clayey material, a crystalline silica and an inert mineral supplement compatible with the clayey material.

13. Element according to Claim 11, **characterized in that** the mineral additive comprises dolomite as the mineral supplement.

14. Element according to Claim 12, **characterized in that** the mineral additive comprises, in approximately equal proportions by weight, the clayey material, the crystalline silica and the inert mineral supplement.

15. Structural element according to Claim 1, **characterized in that** the composition by weight of the said mineral additive in the dry matter, in combination with the amount of the water-repellent agent, is tailored to give the said structural element a water resistance which meets the ASTM 630/630M-96a standards.

16. Structural element according to Claim 1, **characterized in that** the composition by weight of the said mineral additive in the dry matter is tailored also to give the said structural element a fire resistance which meets the German standards DIN 18180 and 4102 (part IV) relating to a so-called GKF board.

17. Element according to Claim 1, having the shape of a board, **characterized in that** the two faces of the cured-plaster substrate are coated with two sheets of cellulose fibres, for example with paperboard.

18. Element according to Claim 1, having the shape of a board, **characterized in that** reinforcing cellulose fibres are distributed in the cured-plaster substrate, for example a so-called "GFB" fibreboard.

19. Element according to Claim 1, **characterized in that** mineral fibres compatible with the hydratable calcium sulfate, for example glass fibres, are distributed in the cured-plaster substrate in a proportion by weight of less than 1% of the dry matter.

20. Water-repellent composition, for a substrate based on cured plaster, comprising, as a homogeneous mix, a water-repellent agent comprising a silicone compound, and a mineral additive comprising, on the one hand, a clayey material, which does not swell in aqueous medium and does not have a hydroxyl functional group ionizable in aqueous medium, and, on the other hand, a crystalline silica, the said mineral additive having a synergistic water-repellency affinity with the said silicone compound, in the sense that, by virtue of adding the mineral additive to the water-repellent composition, the water-repellency obtained for the said substrate is increased by at least 20%, in equivalent Cobb, according to the ASTM 630/630M-96a standard, and/or for the same water repellency (or water resistance) the amount of water-repellent agent required is reduced by at least 20%.

21. Composition according to Claim 20, **characterized in that** the silicone compound and the clayey material are able to form between them, in acid or neutral medium, at least one hydrogen bond between, on one side, the hydrogen of an ionizable hydroxyl functional group of the clayey material and, on the other side, the oxygen of the silicone compound.

22. Use of a mineral additive, in order to increase the water repellency of a water-repellent agent for a substrate based on cured plaster, comprising a silicone compound, **characterized in that** the said mineral additive comprises, on the one hand, a clayey material, which does not swell in aqueous medium and does not have a hydroxyl functional group ionizable in aqueous medium, and, on the other hand, a crystalline silica, the said mineral additive, having a synergistic water-repellency affinity with the said silicone compound, in the sense that, by virtue of adding the mineral additive to the water-repellent composition, the water repellency obtained for the said substrate is increased by at least 20%, in equivalent Cobb, according to the ASTM 630/630M-96a standard and/or for the same water repellency (or water resistance) the amount of water-repellent agent required is reduced by at least 20%.

23. Process for manufacturing a structural element comprising a substrate based on cured plaster, in which the said substrate is obtained by at least the following steps:
a) dry matter comprising mostly at least one hydratable calcium sulfate, a water-repellent agent comprising at least one silicone compound and water of hydration are homogeneously mixed and this substrate is preformed in the wet state;
b) the preformed substrate is dried in order to obtain the substrate formed in the solid and dry state;
**characterized in that**, during step a), a mineral additive, comprising, on the one hand, a clayey material, which does not swell in aqueous medium and does not have a hydroxyl functional group ionizable in aqueous medium, and, on the other hand, a crystalline silica, is also mixed in, the said mineral additive having a synergistic water-repellency affinity with the said silicone compound, in the sense that, by virtue of adding the mineral additive to the water-repellent composition, the water repellency obtained for the said substrate is increased by at least 20%, in equivalent Cobb, according to the ASTM 630/630M-96a standard, and/or for the same water repellency (or water resistance) the amount of water-repellent agent required is reduced by at least 20%.

24. Process according to Claim 23, in order to obtain a "GFB" fibreboard, **characterized in that** the process employed is of the papermaking type with filtration.

25. Process according to Claim 24, **characterized in that** the process includes a so-called semi-wet or semi-dry compression step.

26. Use of a water-repellent composition according to Claim 20 within a plaster substrate of a prefabricated structural element.

## Patentansprüche

1. Vorgefertigtes wasserbeständiges Bauelement, umfassend ein Substrat auf Basis von gehärtetem Gips, wobei das Substrat geeignet ist, durch wenigstens die folgenden Verfahrensschritte erhalten zu werden:
(a) homogenes Mischen eines trockenen Materials, das mehrheitlich wenigstens ein hydratisierbares Calciumsulfat umfaßt, eines Wasserabstoßungsmittels, das wenigstens eine Silicon-Verbindung umfaßt, und von Wasser und Vorformen des Substrats im feuchten Zustand;
(b) Trocknen des vorgeformten Substrats unter Erhalt des geformten Substrats im festen und trockenen Zustand;
**dadurch gekennzeichnet, dass** die homogene Mischung vor der Vorformung des Substrats im feuchten Zustand in gleicher Weise einen mineralischen Zusatzstoff umfaßt, der zum einen ein in wässrigem Milieu nicht quellendes und keine in wässrigem Milieu ionisierbare Hydroxy-Funktion umfassendes Ton-Material und zum anderen ein kristallines Siliciumoxid umfaßt, wobei der mineralische Zusatzstoff eine synergetische Wasserabstoßungs-Affinität mit der Silicon-Verbindung in dem Sinn aufweist, dass sich dank der Zugabe des mineralischen Zusatzstoffes zu der homogenen Mischung die Wasserabstoßung des Substrats im festen und trockenen Zustand um wenigstens 20 % vermehrt findet, angegeben als Cobb-Äquivalent nach der Norm ASTM 630/630M-96a und/oder für dieselbe Wasserabstoßung (oder Beständigkeit gegen Wasser) die erforderliche Menge an Wasserabstoßungsmittel um wenigstens 20 % verringert ist.

2. Element nach Anspruch 1, **dadurch gekennzeichnet, dass** das Ton-Material praktisch nicht mit der Silicon-Verbindung in dem Sinne reagiert, dass nach Ablauf von 2 Stunden die Mischung aus 0,1 g der Silicon-Verbindung mit dem Ton-Material in wässrigem Milieu in denselben Gewichtsanteilen wie denjenigen, wie sie für die Herstellung des vorgefertigten Bauelements verwendet werden, unter Umständen eine Wasserstoff-Menge von weniger als oder gleich 6 ml freisetzt.

3. Element nach Anspruch 2, **dadurch gekennzeichnet, dass** die Silicon-Verbindung und das Ton-Material miteinander in saurem oder neutralem Milieu wenigstens eine Wasserstoff-Bindung zwischen einerseits dem Wasserstoff einer nicht-ionisierbaren Hydroxy-Funktion des Ton-Materials und andererseits dem Sauerstoff der Silicon-Verbindung ausbilden können.

4. Element nach Anspruch 3, **dadurch gekennzeichnet, dass** das Ton-Material ein Aluminosilicat umfaßt, beispielsweise einen Illit und/oder einen Kaolin.

5. Element nach Anspruch 1, **dadurch gekennzeichnet, dass** der mineralische Zusatzstoff auch einen inerten mineralischen Ergänzungsstoff umfaßt, der mit dem Ton-Material verträglich ist.

6. Element nach Anspruch 1, **dadurch gekennzeichnet, dass** die reaktive Silicon-Verbindung eine lineare, cyclische oder verzweigte makromolekulare wasserabstoßende Verbindung ist, die Polysiloxan-Gruppen umfaßt, von denen jede gewählt ist aus der Gruppe, die besteht aus den Gruppen (R₁R₂R₃SiO_{1/2}), (R₁R₂SiO), (R₂SiO_{3/2}) mit:
- R₁ = H, Cl oder jedes andere Halogen oder Alkoxy;
- R₂ = Phenyl oder Alkyl, verzweigt oder nicht-verzweigt;
- R₃ = Phenyl oder Alkyl, verzweigt oder nicht-verzweigt.

7. Element nach Anspruch 6, **dadurch gekennzeichnet, dass** die Silicon-Verbindung ein Alkylhydrogenpolysiloxan ist, beispielsweise Methylhydrogenpolysiloxan.

8. Element nach Anspruch 1, **dadurch gekennzeichnet, dass** die Silicon-Verbindung für einen Gewichtsanteil an insgesamt eingeführtem trockenem Material von wenigstens gleich 0,1 % und vorzugsweise zwischen 0,1 und 1 % steht.

9. Element nach Anspruch 1, **dadurch gekennzeichnet, dass** der mineralische Zusatzstoff eine solche Kornklassierung aufweist, dass die Teilchen, die eine Größe unter oder gleich 63 µm aufweisen, einen Gewichtsanteil von wenigstens gleich 85 % des mineralischen Zusatzstoffes ausmachen.

10. Element nach Anspruch 1, **dadurch gekennzeichnet, dass** der mineralische Zusatzstoff einen Glühverlust unterhalb von 30 % bei 900 °C aufweist.

11. Element nach Anspruch 1, **dadurch gekennzeichnet, dass** der mineralische Zusatzstoff einen Anteil am Gesamtgewicht der Bestandteile mit Ausnahme von Wasser von wenigstens gleich 5 % und vorzugsweise von höchstens gleich 15 % ausmacht.

12. Bauelement nach Anspruch 1, **dadurch gekennzeichnet, dass** der in dem Substrat aus gehärtetem Gips dispergierte mineralische Zusatzstoff ein Ton-Material, ein kristallines Siliciumoxid und einen inerten mineralischen Ergänzungsstoff umfaßt, der mit dem Ton-Material verträglich ist.

13. Element nach Anspruch 11, **dadurch gekennzeichnet, dass** der mineralische Zusatzstoff Dolomit auch als mineralischen Ergänzungsstoff umfaßt.

14. Element nach Anspruch 12, **dadurch gekennzeichnet, dass** der mineralische Zusatzstoff in im wesentlichen gleichen Gewichtsanteilen das Ton-Material, das kristalline Siliciumoxid und den inerten mineralischen Ergänzungsstoff umfaßt.

15. Bauelement nach Anspruch 1, **dadurch gekennzeichnet, dass** die Gewichts-Zusammensetzung des mineralischen Zusatzstoffes in dem trockenen Material in Kombination mit der Menge an Wasserabstoßungsmittel so angepaßt ist, dass sie dem Bauelement eine Wasserbeständigkeit verleiht, die in Übereinstimmung mit den Normen ASTM630/630M-96a ist.

16. Bauelement nach Anspruch 1, **dadurch gekennzeichnet, dass** die Gewichtszusammensetzung des mineralischen Zusatzstoffes in dem trockenen Material so angepaßt ist, dass sie dem Bauelement in gleicher Weise eine Feuerbeständigkeit verleiht, die mit den deutschen Normen DIN 18180 und 4102 (Teil IV) übereinstimmt, bezogen auf eine mit GKF bezeichnete Platte.

17. Element nach Anspruch 1, das die Form einer Platte aufweist, **dadurch gekennzeichnet, dass** die beiden Flächen des Substrats aus gehärtetem Gips mit zwei Platten aus Cellulose-Fasern, beispielsweise aus Karton bedeckt sind.

18. Element nach Anspruch 1, das die Form einer Platte aufweist, **dadurch gekennzeichnet, dass** Cellulose-Verstärkungsfasern in dem Substrat aus gehärtetem Gips verteilt sind, beispielsweise der mit "GFB" bezeichneten Faserplatte.

19. Element nach Anspruch 1, **dadurch gekennzeichnet, dass** mit dem hydratisierbaren Calciumsulfat verträgliche Mineralfasern, beispielsweise Glasfasern, in dem Substrat aus gehärtetem Gips in einer Gewichtsmenge unter 1 % des trockenen Materials verteilt sind.

20. Wasserabstoßende Zusammensetzung als Substrat auf Basis von gehärtetem Gips, umfassend eine homogene Mischung eines Wasserabstoßungsmittels, das eine Silicon-Verbindung umfaßt, und ein mineralisches Zusatzmaterial, das zum einen ein nicht in wässrigem Milieu quellendes und keine in wässrigem Milieu ionisierbare Hydroxy-Funktion umfassendes Ton-Material und zum anderen ein kristallines Siliciumoxid umfaßt, wobei der mineralische Zusatzstoff eine synergetische Wasserabstoßungs-Affinität mit der Silicon-Verbindung in dem Sinne aufweist, dass dank der Zugabe des mineralischen Zusatzstoffes zu der wasserabstoßenden Zubereitung sich die für das Substrat erhaltene Wasserabstoßung um wenigstens 20 % vermehrt findet, angegeben als Cobb-Äquivalent entsprechend der Norm ASTM 630/630M-96a, und/oder für dieselbe Wasserabstoßung (oder Beständigkeit gegenüber Wasser), die erforderliche Menge an Wasserabstoßungsmittel um wenigstens 20 % verringert ist.

21. Zusammensetzung nach Anspruch 20, **dadurch gekennzeichnet, dass** die Silicon-Verbindung und das Ton-Material geeignet sind, miteinander in saurem oder neutralem Milieu wenigstens eine Wasserstoff-Bindung zwischen einerseits dem Wasserstoff einer nicht-ionisierbaren Hydroxy-Funktion des Ton-Materials und andererseits dem Sauerstoff der Silicon-Verbindung zu bilden.

22. Verwendung eines mineralischen Zusatzstoffs zur Vermehrung des Wasserabstoßungsvermögens eines Wasserabstoßungsmittels für ein Substrat auf Basis von gehärtetem Gips, umfassend eine Silicon-Verbindung, **dadurch gekennzeichnet, dass** der mineralische Zusatzstoff zum einen ein in wässrigem Milieu nicht quellendes und keine in wässrigem Milieu ionisierbare Hydroxy-Funktion umfassendes Ton-Material und zum anderen ein kristallines Siliciumoxid umfaßt, wobei der mineralische Zusatzstoff eine synergetische Wasserabstoßungs-Affinität mit der Silicon-Verbindung in dem Sinne umfaßt, dass dank der Zugabe des mineralischen Zusatzstoffes zu der wasserabstoßenden Zubereitung sich die erhaltene Wasserabstoßung für das Substrat um wenigstens 20 % vermehrt findet, angegeben als Cobb-Äquivalent entsprechend der Norm ASTM 630/630M-96a, und/oder für dieselbe Wasserabstoßung (oder Beständigkeit gegen Wasser), die benötigte Menge an Wasserabstoßungsmittel um wenigstens 20 % verringert ist.

23. Verfahren zur Herstellung eines Bauelements, das ein Substrat auf Basis von gehärtetem Gips umfaßt, gemäß dem man das Substrat über wenigstens die folgenden Schritte erhält:
(a) man mischt in homogener Weise ein trockenes Material, das mehrheitlich wenigstens ein hydratisierbares Calciumsulfat umfaßt, ein Wasserabstoßungsmittel, das wenigstens eine Silicon-Verbindung umfaßt, und Hydratations-Wasser, und man formt dieses Substrat in feuchtem Zustand vor;
(b) man trocknet das vorgeformte Substrat unter Erhalt des gebildeten Substrats in festem und trockenen Zustand;
**dadurch gekennzeichnet, dass** man während des Schritts (a) in gleicher Weise einen mineralischen Zusatzstoff einmischt, der zum einen ein in wässrigem Milieu nicht quellendes und keine in wässrigem Milieu ionisierbare Hydroxy-Funktion aufweisendes Ton-Material und zum anderen ein kristallines Siliciumoxid umfaßt, wobei der mineralische Zusatzstoff eine synergetische Wasserabstoßungs-Affinität mit der Silicon-Verbindung in dem Sinne aufweist, dass dank der Zugabe des mineralischen Zusatzstoffes zu der wasserabstoßenden Zusammensetzung sich die für das Substrat erhaltene Wasserabstoßung um wenigstens 20 % vermehrt findet, angegeben als Cobb-Äquivalent nach der Norm ASTM 630/630M-96a, und/oder für dieselbe Wasserabstoßung (oder dieselbe Wasserbeständigkeit) die erforderliche Menge an Wasserabstoßungsmittel um wenigstens 20 % verringert ist.

24. Verfahren nach Anspruch 23 zum Erhalt einer "GFB"-Faserplatte, **dadurch gekennzeichnet, dass** das durchgeführte Verfahren ein Verfahren des Typs Papierherstellungs mit Filtration ist.

25. Verfahren nach Anspruch 24, **dadurch gekennzeichnet, dass** das Verfahren einen Schritt der Pressung umfaßt, die mit "halb-feucht" oder "halb-trocken" bezeichnet wird.

26. Verwendung einer wasserabstoßenden Zubereitung nach Anspruch 20 innerhalb eines Gips-Substrats eines vorgefertigten Bauelements.
